# EUROPÄISCHE PATENTANMELDUNG

(11) **EP 3 339 767 A1**
(43) Veröffentlichungstag der Anmeldung: **27.06.2018**
(21) Anmeldenummer: 17198183.0
(22) Anmeldetag: 25.10.2017
(51) Int. Cl.: F25B 37/00

(54) **ABSORBERVORRICHTUNG**

(30) Priorität: 21.12.2016 DE 102016225704
(71) Anmelder: Robert Bosch GmbH, 70442 Stuttgart (DE)
(72) Erfinder: Nguyen, Minh, 80797 Muenchen (DE); Domaschke, Norbert, 71229 Leonberg (DE)

(57) **Zusammenfassung**

Die Erfindung geht aus von einer Absorbervorrichtung, insbesondere für eine Gas-Absorptionswärmepumpe (12a-f), mit zumindest einem Blasenabsorber (14a-f), welcher zumindest einen Absorptionstank (16a-f) aufweist und welcher dazu vorgesehen ist, innerhalb des Absorptionstanks (16a-f) zumindest einen flüssigen Arbeitsstoff (18a-f) mittels Absorption mit zumindest einem dem Absorptionstank (16a-f) zugeführten gasförmigen Arbeitsmittel (20a-f) anzureichern.

Es wird vorgeschlagen, dass der Blasenabsorber (14a-f) zumindest einen Blasengenerator (22a-f) aufweist, welcher dazu vorgesehen ist, das gasförmige Arbeitsmittel (20a-f) blasenförmig in den flüssigen Arbeitsstoff (18a-f) einzuleiten.

## Beschreibung

### Stand der Technik

Es ist bereits eine Absorbervorrichtung mit zumindest einem Blasenabsorber, welcher zumindest einen Absorptionstank aufweist und welcher dazu vorgesehen ist, innerhalb des Absorptionstanks zumindest einen flüssigen Arbeitsstoff mittels Absorption mit zumindest einem dem Absorptionstank zugeführten, gasförmigen Arbeitsmittel anzureichern, bekannt.

### Offenbarung der Erfindung

Die Erfindung geht aus von einer Absorbervorrichtung, insbesondere für eine Gas-Absorptionswärmepumpe, mit zumindest einem Blasenabsorber, welcher zumindest einen Absorptionstank aufweist und welcher dazu vorgesehen ist, innerhalb des Absorptionstanks zumindest einen flüssigen Arbeitsstoff mittels Absorption mit zumindest einem dem Absorptionstank zugeführten gasförmigen Arbeitsmittel anzureichern.

Es wird vorgeschlagen, dass der Blasenabsorber zumindest einen Blasengenerator aufweist, welcher dazu vorgesehen ist, das gasförmige Arbeitsmittel blasenförmig in den flüssigen Arbeitsstoff einzuleiten.

Unter einer "Absorbervorrichtung" soll in diesem Zusammenhang insbesondere eine Vorrichtung verstanden werden, welche zumindest zu einer Aufnahme und Lösung von Gasen und/oder Dämpfen in Flüssigkeiten und/oder festen Körpern vorgesehen ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Gas-Absorptionswärmepumpe" soll in diesem Zusammenhang insbesondere eine Wärmepumpe verstanden werden, welche ausschließlich oder zumindest überwiegend durch zumindest eine Heizenergie angetrieben wird. Ähnlich einer Kompressionswärmepumpe arbeitet eine Gas-Absorptionswärmepumpe mit zwei unterschiedlichen Druckniveaus, wobei jedoch der Kompressor durch einen Absorptions- und einen Austreibprozess ersetzt wird. Unter einem "Blasenabsorber" soll in diesem Zusammenhang insbesondere ein Absorber verstanden werden, welcher auf dem Prinzip von in einem flüssigen Arbeitsstoff aufsteigenden Blasen eines gasförmigen Arbeitsmittels basiert. Insbesondere bei einer starken Zerteilung des Gasvolumens des Arbeitsmittels in feine Bläschen kann eine hohe spezifische Austauschfläche zwischen dem flüssigen Arbeitsstoff und dem gasförmigen Arbeitsmittel erreicht werden. Neben der Absorbervorrichtung weist die Gas-Absorptionswärmepumpe insbesondere zumindest einen Austreiber, zumindest einen Kondensator und zumindest einen Verdampfer auf.

Unter einem "Arbeitsstoff" soll in diesem Zusammenhang insbesondere ein flüssiges Lösungsmittel verstanden werden, welches dazu vorgesehen ist, zumindest einen gasförmigen Stoff, insbesondere ein Arbeitsmittel, durch Absorption aufzunehmen. Insbesondere kann es sich bei dem Arbeitsstoff um Wasser handeln. Unter einem "Arbeitsmittel" soll in diesem Zusammenhang insbesondere ein Kühlmittel verstanden werden, welches dem Arbeitssoff zu einer Absorption gasförmig zugeführt wird. Insbesondere kann es sich bei dem Arbeitsstoff um Ammoniak handeln.

Unter einem "Absorptionstank" soll in diesem Zusammenhang insbesondere ein zumindest im Wesentlichen gasdichter Tank verstanden werden, welcher zu einer Aufnahme des flüssigen Arbeitsstoffs vorgesehen ist und innerhalb welchem ein Absorptionsprozess abläuft. Insbesondere wird das gasförmige Arbeitsmittel zu einer Absorption durch den flüssigen Arbeitsstoff in den Absorptionstank eingeleitet. Unter einem "Blasengenerator" soll in diesem Zusammenhang insbesondere ein Element oder eine Einheit verstanden werden, welche dazu vorgesehen ist, ein dem Absorptionstank zugeführtes Gasvolumen des Arbeitsmittels bei einer Einleitung in den flüssigen Arbeitsstoff in eine Vielzahl von Gasblasen zu zerteilen.

Durch eine derartige Ausgestaltung kann eine gattungsgemäße Absorbervorrichtung mit verbesserten Betriebseigenschaften bereitgestellt werden. Insbesondere kann durch die blasenförmige Einleitung des gasförmigen Arbeitsmittels durch einen Blasengenerator eine vorteilhaft große Grenzfläche zwischen dem gasförmigen Arbeitsmittel und dem flüssigen Arbeitsstoff erreicht werden, wodurch ein vorteilhaft hoher Massen- und/oder Wärmeübergang erreicht werden kann.

Ferner wird vorgeschlagen, dass der Blasengenerator dazu vorgesehen ist, Gasblasen mit einem zumindest im Wesentlichen definierten Durchmesser zu generieren. Darunter, dass der Blasengenerator dazu vorgesehen ist, Gasblasen mit einem zumindest im Wesentlichen "definierten Durchmesser" zu generieren, soll in diesem Zusammenhang insbesondere verstanden werden, dass der Blasengenerator ein zugeführtes Gasvolumen des gasförmigen Arbeitsmittels bei einer Einleitung in den flüssigen Arbeitsstoff in Blasen zerteilt, welche einen Durchmesser aufweisen, der innerhalb eines festgelegten Wertebereichs liegt. Insbesondere können die mittels des Blasengenerators erzeugten Blasen einen zumindest im Wesentlichen identischen Durchmesser aufweisen. Insbesondere kann ein Durchmesser der Blasen beispielsweise durch eine Wahl eines Materials und/oder einer Geometrie des Blasengenerators variiert und/oder angepasst werden. Hierdurch kann eine vorteilhafte Anpassung einer Absorptionsrate und damit einer Wärmefreisetzung des Absorptionsprozesses erfolgen.

Des Weiteren wird vorgeschlagen, dass der Blasengenerator zumindest im Wesentlichen von einem offenporösen Material gebildet ist. Unter einem "offenporösen Material" soll in diesem Zusammenhang insbesondere ein Material verstanden werden, welches insbesondere eine Vielzahl von Hohlräumen aufweist, die insbesondere fluidtechnisch untereinander und/oder mit einer Umgebung in Verbindung stehen. Insbesondere der Blasengenerator weist zumindest eine Zuleitung auf, welche dazu vorgesehen ist, das gasförmige Arbeitsmittel in das offenporöse Material einzuleiten. Das offenporöse Material kann beispielsweise von einem keramischen und/oder metallischen Schaum gebildet sein. Alternativ oder zusätzlich kann der Blasengenerator zumindest teilweise von einer ein- oder mehrlagigen Schüttung aus Pellets, Granulat und/oder Kugeln aus Keramik oder Metall und/oder einer keramischen und/oder metallischen Lochplatte ausgebildet sein. Hierdurch kann ein vorteilhaft einfacher und/oder kostengünstiger Aufbau erreicht werden. Ferner kann eine Generierung von Blasen mit einem vorteilhaft geringen Durchmesser erreicht werden.

Zudem wird vorgeschlagen, dass der Blasengenerator zumindest im Wesentlichen in einem Bodenbereich des Absorptionstanks angeordnet ist. Alternativ oder zusätzlich kann der Blasengenerator zumindest teilweise einen Boden des Absorptionstanks ausbilden. Eine Grundfläche des Blasengenerators entspricht zumindest im Wesentlichen einer Grundfläche des Absorptionstanks. Hierdurch kann eine vorteilhaft homogene Verteilung der Blasen des gasförmigen Arbeitsmittels in dem flüssigen Arbeitsstoff erreicht werden. Ferner kann durch die Anordnung des Blasengenerators in einem Bodenbereich des Absorptionstanks eine vorteilhaft lange Verweildauer der Blasen des gasförmigen Arbeitsmittels in dem flüssigen Arbeitsstoff erreicht werden.

Ferner wird vorgeschlagen, der Blasenabsorber zumindest einen weiteren Blasengenerator aufweist, welcher zumindest im Wesentlichen parallel versetzt zu dem Blasengenerator innerhalb des Absorptionstanks angeordnet ist. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Insbesondere ist der weitere Blasengenerator oberhalb des Blasengenerators angeordnet, welcher in einem Bodenbereich des Absorptionstanks angeordnet ist. Alternativ oder zusätzlich wird vorgeschlagen, dass der Blasenabsorber zumindest einen weiteren Blasengenerator aufweist, welcher zumindest im Wesentlichen senkrecht zu dem Blasengenerator innerhalb des Absorptionstanks angeordnet ist. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Insbesondere ist der weitere Blasengenerator zumindest im Wesentlichen senkrecht zu dem Blasengenerator angeordnet, welcher in einem Bodenbereich des Absorptionstanks angeordnet ist. Insbesondere können die Blasengeneratoren voneinander getrennte Zuleitungen für das gasförmige Arbeitsmittel aufweisen. Insbesondere kann das gasförmige Arbeitsmittel den Blasengeneratoren mit verschiedenen Drücken und/oder Volumenströmen zugeführt werden. Hierdurch kann ein Ort und/oder ein Niveau einer Wärmefreisetzung während einer Absorption des gasförmigen Arbeitsmittels vorteilhaft angepasst werden.

Ferner wird vorgeschlagen, dass der Blasenabsorber zumindest eine Plenumkammer aufweist, welche dazu vorgesehen ist, dem Blasengenerator das gasförmige Arbeitsmittel gleichmäßig zuzuführen. Unter einer "Plenumkammer" soll in diesem Zusammenhang insbesondere eine Kammer verstanden werden, welche dem Blasengenerator fluidtechnisch vorgelagert ist und welche dazu vorgesehen ist, dem Blasengenerator das gasförmige Arbeitsmittel gleichmäßig zuzuführen. Insbesondere ist die Plenumkammer unterhalb des Blasengenerators angeordnet. Insbesondere ist eine Wandung der Plenumkammer zumindest im Wesentlichen von dem Blasengenerator gebildet. Der Blasengenerator bildet zumindest im Wesentlichen eine in Richtung des Absorptionstanks gerichtete Wandung der Plenumkammer aus. Hierdurch kann eine vorteilhaft gleichmäßige Zuführung des gasförmigen Arbeitsmittels zum Blasengenerator erreicht werden.

Des Weiteren wird vorgeschlagen, dass der Blasenabsorber zumindest einen Wärmeübertrager aufweist, welcher zumindest im Wesentlichen innerhalb des Absorptionstanks angeordnet ist. Unter einem "Wärmeübertrager" soll in diesem Zusammenhang insbesondere eine Einheit verstanden werden, welche dazu vorgesehen ist, Wärme in Richtung eines Temperaturgefälles zwischen zumindest zwei insbesondere fluiden Stoffströmen zu übertragen, insbesondere in einem Gegenstrombetrieb. Der Wärmeübertrager ist während eines Betriebs der Absorbervorrichtung zumindest im Wesentlichen vollständig von dem flüssigen Arbeitsstoff umgeben. Insbesondere ist der Wärmeübertrager dazu vorgesehen, innerhalb des Absorptionstanks freigesetzte Absorptionswärme auf zumindest ein Heizfluid zu übertragen. Hierdurch kann eine vorteilhafte Nutzung der innerhalb des Absorptionstanks freigesetzten Absorptionswärme erreicht werden.

Ferner wird eine Gas-Absorptionswärmepumpe mit zumindest einer erfindungsgemäßen Absorbervorrichtung vorgeschlagen.

Zudem wird ein Verfahren zum Betrieb einer Absorbervorrichtung mit zumindest einem Blasenabsorber vorgeschlagen, bei welchem ein flüssiger Arbeitsstoff mittels Absorption mit zumindest einem gasförmigen Arbeitsmittel angereichert wird, das gasförmige Arbeitsmittel mittels zumindest eines Blasengenerators blasenförmig in den flüssigen Arbeitsstoff eingeleitet wird. Durch die blasenförmige Einleitung des gasförmigen Arbeitsmittels durch einen Blasengenerator kann eine vorteilhaft große Grenzfläche zwischen dem gasförmigen Arbeitsmittel und dem flüssigen Arbeitsstoff erreicht werden, wodurch ein vorteilhaft hoher Massen- und/oder Wärmeübergang erreicht werden kann.

Die erfindungsgemäße Absorbervorrichtung und/oder das erfindungsgemäße Verfahren soll/sollen hierbei nicht auf die oben beschriebene Anwendung und Ausführungsform beschränkt sein. Insbesondere kann die erfindungsgemäße Absorbervorrichtung und/oder das erfindungsgemäße Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind sechs Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:
- Fig. 1: eine schematische Darstellung einer Gas-Adsorptionswärmepumpe mit einer Absorbervorrichtung, welche zumindest einen Blasenabsorber aufweist,
- Fig. 2: eine vereinfachte Darstellung der Absorbervorrichtung mit dem Blasengenerator, welcher einen Blasengenerator aufweist,
- Fig. 3: eine vereinfachte Darstellung einer alternativen Absorbervorrichtung mit einem Blasengenerator, welcher einen Blasengenerator und eine Plenumkammer aufweist,
- Fig. 4: eine vereinfachte Darstellung einer weiteren alternativen Absorbervorrichtung mit deinem Blasengenerator, welcher zwei parallel zueinander angeordnete Blasengeneratoren aufweist,
- Fig. 5: eine vereinfachte Darstellung einer weiteren alternativen Absorbervorrichtung mit einem Blasengenerator, welcher zwei senkrecht zueinander angeordnete Blasengeneratoren aufweist,
- Fig. 6: eine vereinfachte Darstellung einer weiteren alternativen Absorbervorrichtung mit einem Blasengenerator, welcher mittels gasdichten Stegen unterteilt ist, und
- Fig. 7: eine vereinfachte Darstellung einer weiteren alternativen Absorbervorrichtung mit einem Blasengenerator, welcher als Lochplatte ausgebildet ist.

### Beschreibung der Ausführungsbeispiele

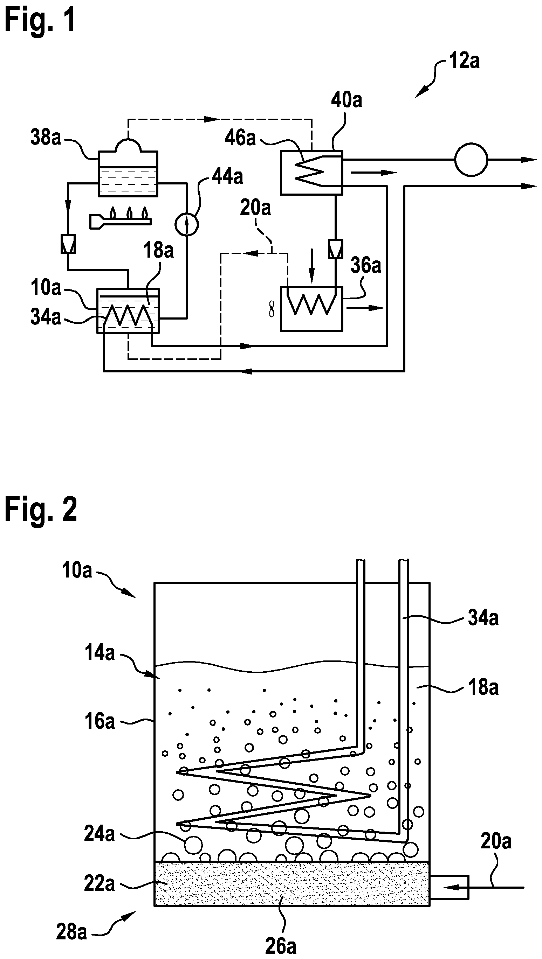

Figur 1 zeigt eine schematische Darstellung einer Gas-Absorptionswärmepumpe 12a. Die Gas-Absorptionswärmepumpe 12a umfasst einen Verdampfer 36a, einen Austreiber 38a, einen Kondensator 40a und eine Absorbervorrichtung 10a. Die Gas-Absorptionswärmepumpe 12a arbeitet mit einem wasserlöslichen Arbeitsmittel 20a, beispielsweise mit Ammoniak. Das Arbeitsmittel 20a wird in flüssiger Form dem Verdampfer 36a zugeführt. Innerhalb des Verdampfers 36a wird das Arbeitsmittel 20a durch Verdampfen in einen gasförmigen Zustand überführt. Nach dem Verdampfer 36a wird das gasförmige Arbeitsmittel 20a der Absorbervorrichtung 10a zugeführt. Innerhalb der Absorbervorrichtung 10a befindet sich ein flüssiger Arbeitsstoff 18a, beispielsweise Wasser, welcher durch Absorption mit dem gasförmigen Arbeitsmittel 20a angereichert wird. Bei dem Absorptionsvorgang freigesetzte Wärme wird mittels eines Wärmeübertragers 34a abgeführt. Der mit dem Arbeitsmittel 20a angereicherte flüssige Arbeitsstoff 18a wird mittels einer Pumpe 44a in den Austreiber 38a transportiert. Dabei erhöht sich der Druck des mit dem Arbeitsmittel 20a angereicherten flüssigen Arbeitsstoffs 18a. Innerhalb des Austreibers 38a werden der Arbeitsstoff 18a und das Arbeitsmittel 20a durch zuführen von Wärme voneinander getrennt. Die Trennung erfolgt auf Grund der unterschiedlichen Siedetemperaturen von Arbeitsstoff 18a und Arbeitsmittel 20a. Eine nur sehr geringe Erwärmung reicht schon aus, um das Arbeitsmittel 20a wieder aus dem Arbeitsstoff 18a auszutreiben. Das Arbeitsmittel 20a liegt nun wieder gasförmig und der Arbeitsstoff 18a weiterhin flüssig vor. Der unter Druck stehende Arbeitsstoff 18a wird in die Absorbervorrichtung 10a zurückgeführt. Das heiße gasförmige Arbeitsmittel 20a wird dem Kondensator 40a zugeführt, wo es unter Abgabe von Wärme, welche über einen Wärmeübertrager 46a abgeführt wird, wieder verflüssigt wird. Das wieder flüssige Arbeitsmittel 20a wird wieder dem Verdampfer 36a zugeführt.

Figur 2 zeigt eine vereinfachte Darstellung der Absorbervorrichtung 10a. Die Absorbervorrichtung 10a umfasst einen Blasenabsorber 14a, welcher zumindest einen Absorptionstank 16a aufweist. Der Blasenabsorber 14a ist dazu vorgesehen, innerhalb des Absorptionstanks 16a den flüssigen Arbeitsstoff 18a mittels Absorption mit dem dem Absorptionstank 16a zugeführten gasförmigen Arbeitsmittel 20a anzureichern. Der Blasenabsorber 14a weist zumindest einen Blasengenerator 22a auf, welcher dazu vorgesehen ist, das gasförmige Arbeitsmittel 20a blasenförmig in den flüssigen Arbeitsstoff 18a einzuleiten. Der Blasengenerator 22a ist dazu vorgesehen, Gasblasen 24a mit einem zumindest im Wesentlichen definierten Durchmesser zu generieren.

Der Blasengenerator 22a ist zumindest im Wesentlichen von einem offenporösen Material 26a gebildet. Das offenporöse Material 26a kann beispielsweise von einem keramischen und/oder metallischen Schaum gebildet sein. Alternativ oder zusätzlich kann der Blasengenerator 22a zumindest teilweise von einer ein- oder mehrlagigen Schüttung aus Pellets, Granulat und/oder Kugeln aus Keramik oder Metall gebildet sein. Der Blasengenerator 22a ist zumindest im Wesentlichen in einem Bodenbereich 28a des Absorptionstanks 16a angeordnet. Der Blasenabsorber 14a weist zumindest einen Wärmeübertrager 34a auf, welcher zumindest im Wesentlichen innerhalb des Absorptionstanks 16a angeordnet ist. Insbesondere ist der Wärmeübertrager 34a dazu vorgesehen, innerhalb des Absorptionstanks 16a freigesetzte Absorptionswärme auf zumindest ein Heizfluid zu übertragen. Der Wärmeübertrager 34a ist hier beispielhaft als ein Rohrwendelwärmeübertrager ausgebildet.

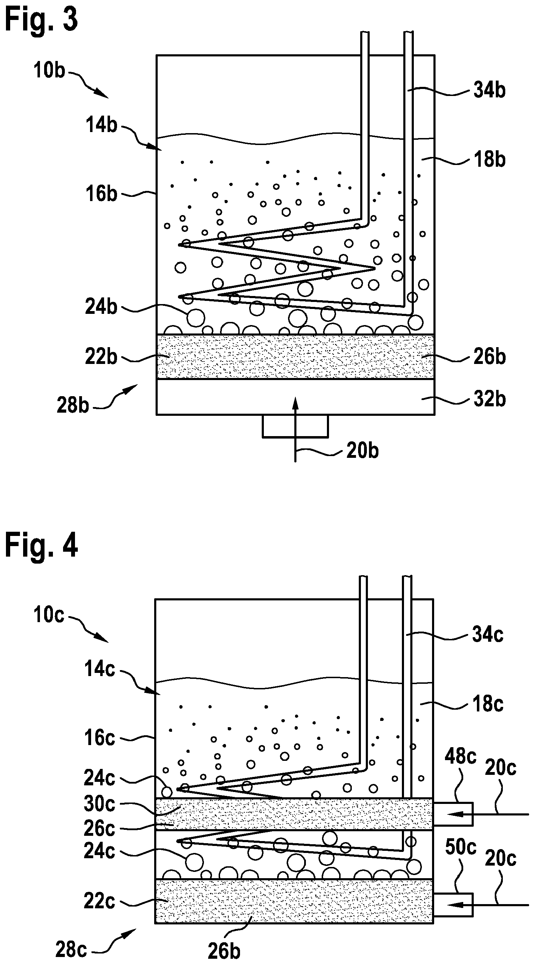

In den Figuren 3 bis 7 sind fünf weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In den Ausführungsbeispielen der Figuren 3 bis 7 ist der Buchstabe a durch die Buchstaben b bis f ersetzt.

Figur 3 zeigt eine vereinfachte Darstellung einer alternativen Absorbervorrichtung 10b. Die Absorbervorrichtung 10b umfasst einen Blasenabsorber 14b, welcher zumindest einen Absorptionstank 16b aufweist. Der Blasenabsorber 14b weist zumindest einen Blasengenerator 22b auf, welcher dazu vorgesehen ist, das gasförmige Arbeitsmittel 20b blasenförmig in den flüssigen Arbeitsstoff 18b einzuleiten. Der Blasengenerator 22b ist dazu vorgesehen, Gasblasen 24b mit einem zumindest im Wesentlichen definierten Durchmesser zu generieren. Der Blasenabsorber 14b weist eine Plenumkammer 32b auf, welche dazu vorgesehen ist, dem Blasengenerator 22b das gasförmige Arbeitsmittel 20b gleichmäßig zuzuführen. Das gasförmige Arbeitsmittel 20b wird in die Plenumkammer 32b eingeleitet und von dort gleichmäßig über den Blasengenerator 22b verteilt. Die Plenumkammer 32b ist unterhalb des Blasengenerators 22b angeordnet. Der Blasengenerator 22b bildet eine in Richtung des Absorptionstanks 16b gerichtete Wandung der Plenumkammer 32b aus.

Figur 4 zeigt eine vereinfachte Darstellung einer weiteren alternativen Absorbervorrichtung 10c. Die Absorbervorrichtung 10c umfasst einen Blasenabsorber 14c, welcher zumindest einen Absorptionstank 16b aufweist. Der Blasenabsorber 14c weist zumindest einen Blasengenerator 22c auf, welcher dazu vorgesehen ist, das gasförmige Arbeitsmittel 20c blasenförmig in den flüssigen Arbeitsstoff 18c einzuleiten. Der Blasengenerator 22c ist dazu vorgesehen, Gasblasen 24c mit einem zumindest im Wesentlichen definierten Durchmesser zu generieren. Der Blasenabsorber 14c weist zumindest einen weiteren Blasengenerator 30c auf, welcher zumindest im Wesentlichen parallel versetzt zu dem Blasengenerator 22c innerhalb des Absorptionstanks 16c angeordnet ist. Die Blasengeneratoren 22c, 30c weisen voneinander getrennte Zuleitungen 48c, 50c für das gasförmige Arbeitsmittel 20c auf.

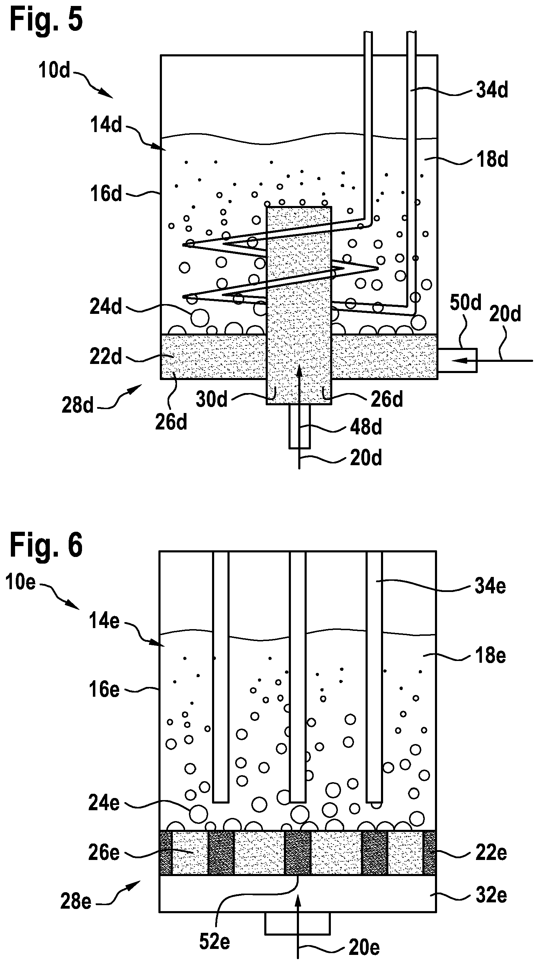

Figur 5 zeigt eine vereinfachte Darstellung einer weiteren alternativen Absorbervorrichtung 10d. Die Absorbervorrichtung 10d umfasst einen Blasenabsorber 14d, welcher zumindest einen Absorptionstank 16d aufweist. Der Blasenabsorber 14d weist zumindest einen Blasengenerator 22d auf, welcher dazu vorgesehen ist, das gasförmige Arbeitsmittel 20d blasenförmig in den flüssigen Arbeitsstoff 18d einzuleiten. Der Blasengenerator 22d ist dazu vorgesehen, Gasblasen 24d mit einem zumindest im Wesentlichen definierten Durchmesser zu generieren. Der Blasenabsorber 14d weist zumindest einen weiteren Blasengenerator 30d auf, welcher zumindest im Wesentlichen senkrecht zu dem Blasengenerator 22d innerhalb des Absorptionstanks 16d angeordnet ist. Die Blasengeneratoren 22d, 30d weisen voneinander getrennte Zuleitungen 48d, 50d für das gasförmige Arbeitsmittel 20d auf.

Figur 6 zeigt eine vereinfachte Darstellung einer weiteren alternativen Absorbervorrichtung 10e. Die Absorbervorrichtung 10e umfasst einen Blasenabsorber 14e, welcher zumindest einen Absorptionstank 16e aufweist. Der Blasenabsorber 14e weist zumindest einen Blasengenerator 22e auf, welcher dazu vorgesehen ist, das gasförmige Arbeitsmittel 20e blasenförmig in den flüssigen Arbeitsstoff 18e einzuleiten. Der Blasengenerator 22e ist dazu vorgesehen, Gasblasen 24e mit einem zumindest im Wesentlichen definierten Durchmesser zu generieren. Der Blasengenerator 22e ist zumindest im Wesentlichen von einem offenporösen Material 26e gebildet. Das offenporöse Material 26e des Blasengenerators 22e ist durch senkrechte gasundurchlässige Stege 52e unterbrochen. Der Blasenabsorber 14e weist zumindest einen Wärmeübertrager 34e auf, welcher zumindest im Wesentlichen innerhalb des Absorptionstanks 16e angeordnet ist. Der Wärmeübertrager 34e ist zumindest im Wesentlichen oberhalb der gasdichten Stege 52e angeordnet. Der Wärmeübertrager 34e ist hier beispielhaft als ein Plattenwärmeübertrager ausgebildet.

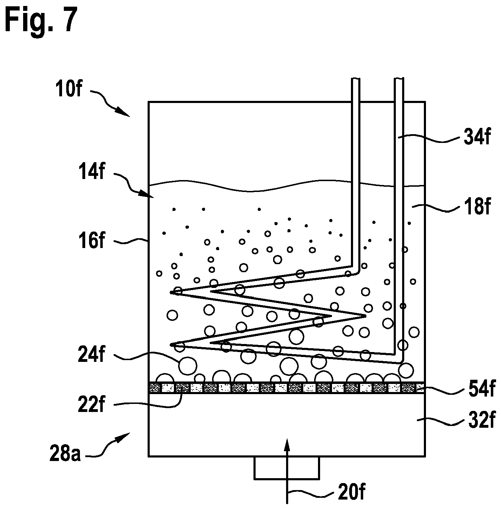

Figur 7 zeigt eine vereinfachte Darstellung einer weiteren alternativen Absorbervorrichtung 10f. Die Absorbervorrichtung 10f umfasst einen Blasenabsorber 14f, welcher zumindest einen Absorptionstank 16f aufweist. Der Blasenabsorber 14f weist zumindest einen Blasengenerator 22f auf, welcher dazu vorgesehen ist, das gasförmige Arbeitsmittel 20f blasenförmig in den flüssigen Arbeitsstoff 18f einzuleiten. Der Blasengenerator 22f ist dazu vorgesehen, Gasblasen 24f mit einem zumindest im Wesentlichen definierten Durchmesser zu generieren. Der Blasengenerator 22f ist von einer beispielsweise metallischen und/oder keramischen Lochplatte 54f gebildet.

## Patentansprüche

1. Absorbervorrichtung, insbesondere für eine Gas-Absorptionswärmepumpe (12a-f), mit zumindest einem Blasenabsorber (14a-f), welcher zumindest einen Absorptionstank (16a-f) aufweist und welcher dazu vorgesehen ist, innerhalb des Absorptionstanks (16a-f) zumindest einen flüssigen Arbeitsstoff (18a-f) mittels Absorption mit zumindest einem dem Absorptionstank (16a-f) zugeführten gasförmigen Arbeitsmittel (20a-f) anzureichern, **dadurch gekennzeichnet, dass** der Blasenabsorber (14a-f) zumindest einen Blasengenerator (22a-f) aufweist, welcher dazu vorgesehen ist, das gasförmige Arbeitsmittel (20a-f) blasenförmig in den flüssigen Arbeitsstoff (18a-f) einzuleiten.

2. Absorbervorrichtung nach Anspruch 1, **dadurch gekennzeichnet, dass** der Blasengenerator (22a-f) dazu vorgesehen ist, Gasblasen (24a-f) mit einem zumindest im Wesentlichen definierten Durchmesser zu generieren.

3. Absorbervorrichtung nach Anspruch 1 oder 2, **dadurch gekennzeichnet, dass** der Blasengenerator (22a-e) zumindest im Wesentlichen von einem offenporösen Material (26a-e) gebildet ist.

4. Absorbervorrichtung nach einem der vorhergehenden Ansprüche, **dadurch gekennzeichnet, dass** der Blasengenerator (22a-f) zumindest im Wesentlichen in einem Bodenbereich (28a-f) des Absorptionstanks (16a-f) angeordnet ist.

5. Absorbervorrichtung nach einem der vorhergehenden Ansprüche, **dadurch gekennzeichnet, dass** der Blasenabsorber (14c) zumindest einen weiteren Blasengenerator (30c) aufweist, welcher zumindest im Wesentlichen parallel versetzt zu dem Blasengenerator (22c) innerhalb des Absorptionstanks (16c) angeordnet ist.

6. Absorbervorrichtung nach einem der vorhergehenden Ansprüche, **dadurch gekennzeichnet, dass** der Blasenabsorber (14d) zumindest einen weiteren Blasengenerator (30d) aufweist, welcher zumindest im Wesentlichen senkrecht zu dem Blasengenerator (22d) innerhalb des Absorptionstanks (16d) angeordnet ist.

7. Absorbervorrichtung nach einem der vorhergehenden Ansprüche, **dadurch gekennzeichnet, dass** der Blasenabsorber (14b; 14e; 14f) zumindest eine Plenumkammer (32b; 32e; 32f) aufweist, welche dazu vorgesehen ist, dem Blasengenerator (22b; 22e; 22f) das gasförmige Arbeitsmittel (20b; 20e; 20f) gleichmäßig zuzuführen.

8. Absorbervorrichtung nach einem der vorhergehenden Ansprüche, **dadurch gekennzeichnet, dass** der Blasenabsorber (14a-f) zumindest einen Wärmeübertrager (34a-f) aufweist, welcher zumindest im Wesentlichen innerhalb des Absorptionstanks (16a-f) angeordnet ist.

9. Gas-Absorptionswärmepumpe mit zumindest einer Absorbervorrichtung (10) nach einem der Ansprüche 1 bis 8.

10. Verfahren zum Betrieb einer Absorbervorrichtung (10a-f) nach einem der Ansprüche 1 bis 8 mit zumindest einem Blasenabsorber (14a-f), bei welchem ein flüssiger Arbeitsstoff (18a-f) mittels Absorption mit zumindest einem gasförmigen Arbeitsmittel (20a-f) angereichert wird, **dadurch gekennzeichnet, dass** das gasförmige Arbeitsmittel (20a-f) mittels zumindest eines Blasengenerators (22a-f, 30a-f) blasenförmig in den flüssigen Arbeitsstoff (18a-f) eingeleitet wird.
